# EUROPÄISCHE PATENTSCHRIFT

(11) **EP 1 098 153 B1**
(45) Veröffentlichungstag und Bekanntmachung des Hinweises auf die Patenterteilung: **23.07.2003**
(21) Anmeldenummer: 00122788.3
(22) Anmeldetag: 19.10.2000
(51) Int. Cl.: F26B 3/28

(54) **UV-Bestrahlungsvorrichtung**
UV radiation device
Dispositif de rayonnement UV

(30) Priorität: 05.11.1999 DE 29919483 U; 13.01.2000 DE 10001146
(43) Veröffentlichungstag der Anmeldung: 09.05.2001
(73) Patentinhaber: Dr. Hönle AG, 82152 Planegg (DE)
(72) Erfinder: Stirner, Dieter, c/o Dr. Hönle AG, 82152 Planegg (DE); Runge, Heiko, c/o Dr. Hönle AG, 82152 Planegg (DE); Büngener, Jens, c/o Dr. Hönle AG, 82152 Planegg (DE); Spitzer, Klaus, c/o Dr. Hönle AG, 82152 Planegg (DE)
(74) Vertreter: Körber, Martin, Dipl.-Phys.

(56) Entgegenhaltungen:
- DE-A- 19 651 977
- DE-U- 9 312 809
- DE-U- 29 816 588
- US-A- 5 779 855

## Beschreibung

Die vorliegende Erfindung betrifft eine Bestrahlungsvorrichtung zum Bestrahlen von kreisförmigen Objekten mit ultravioletter Strahlung (UV-Strahlung). Eine solche Vorrichtung ist z.B. aus der DE-A-196 51 977 bekannt.

Die erfindungsgemäße Bestrahlungsvorrichtung ist dabei insbesondere zur Bestrahlung von Speichermedien aus Kunststoff, wie zum Beispiel ausschließlich lesbare oder sowohl lesbare als auch wiederbeschreibbare Compact-Discs (CDs), Digital Video Discs (DVDs) und dergleichen geeignet, um durch die von der UV-Strahlung ausgelösten fotochemischen Reaktionen abhängig von der Ausstrahlungsenergie, beispielsweise Klebstoffe, Lacke und Kunststoffe, zu trocknen oder auszuhärten.

Die Aufgabe der vorliegenden Erfindung ist dabei, eine Bestrahlungsvorrichtung zum Bestrahlen von kreisförmigen Objekten mit UV-Strahlung bereitzustellen, mit der die Bestrahlung des Objektes auf möglichst einfache und effektive Weise insbesondere hinsichtlich der notwendigen Leistung und der Erhitzung des Objektes durchgeführt werden kann.

Die obige Aufgabe wird durch eine Bestrahlungsvorrichtung zum Bestrahlen von kreisförmigen Objekten mit UV-Strahlung gemäß Anspruch 1 gelöst. Die erfindungsgemäße Bestrahlungsvorrichtung umfaßt dabei eine längliche Hochdruck-Entladungslampe zum Ausstrahlen von UV-Strahlung, einen länglichen Reflektor aus hochreflektierendem Material, zum Beispiel Aluminium, der sich längs der Hochdruck-Entladungslampe erstreckt und diese teilweise umschließt, um die ausgestrahlte UV-Strahlung auf ein zu bestrahlendes Objekt zu reflektieren, und einem nach innen reflektierenden zylindrischen Reflektor aus hoch reflektierendem Material, zum Beispiel Aluminium, der zwischen der Hochdruck-Entladungslampe und dem zu bestrahlenden Objekt dergestalt angeordnet ist, daß die von der Hochdruck-Entladungslampe, dem länglichen Reflektor und dem zylindrischen Reflektor kommende UV-Strahlung in einer weitgehend homogenen Intensitätsverteilung auf das Objekt fällt.

Der erfindungsgemäße nach innen reflektierende zylindrische Reflektor hat dabei insbesondere die Funktion, die von der eine längliche Form aufweisenden Hochdruck-Entladungslampe und deren länglichen Reflektor kommende UV-Strahlung mit einer homogenen Intensitätsverteilung auf die Oberfläche eines kreisförmigen Objektes zu lenken. Dabei müssen die Abmessungen der verschiedenen Elemente, insbesondere die Länge der Hochdruck-Entladungslampe (Bogenlänge) und des länglichen Reflektors sowie die Höhe und der Durchmesser des zylindrischen Reflektors entsprechend auf den Durchmesser der Oberfläche des kreisförmigen, zu bestrahlenden Objektes abgestimmt sein. Die erfindungsgemäße Bestrahlungsvorrichtung ermöglicht dabei insbesondere, die auf das zu bestrahlende Objekt auftreffende UV-Strahlung mit einer einigermaßen gleichmäßigen Intensitätsverteilung über die Objektoberfläche zu verteilen, so daß der Bestrahlungszweck (zum Beispiel Trocknen oder Härten) auch an Stellen mit niedrigerer Strahlungsintensität erreicht werden kann, ohne daß andere Stellen, an denen eine höhere Strahlungsintensität auftritt, zu stark erhitzt werden oder auf irgend eine andere Weise durch die höhere Strahlungsintensität beschädigt werden. Weiterhin wird durch die verbesserte und homogenere Intensitätsverteilung der UV-Strahlung auf dem Objekt insgesamt eine Energieeinsparung ermöglicht, die Spitzentemperatur auf dem Objekt gesenkt und die Belichtungszeit bzw. Bestrahlungszeit verkürzt, so daß eine effiziente und wirtschaftliche Bestrahlung realisiert werden kann. Die homogene Intensitätsverteilung hat insbesondere auch den weiteren Vorteil, daß ein Drehen des Objektes während dem Bestrahlungsvorgang, wie es teilweise bei bekannten Apparaten üblich ist, entfallen kann, wodurch eine weitere Kostenverringerung erreicht wird.

Vorteilhafterweise weist der längliche Reflektor zwei längliche Reflektorelemente auf, die jeweils einen zumindest teilweise parabelförmigen Querschnitt haben. Die Aufteilung des Reflektors in zwei längliche Reflektorelemente und der zumindest teilweise parabelförmige Querschnitt der beiden Reflektorelemente ermöglicht eine beispielsweise im Vergleich zu elliptischen Querschnitten homogenere Abstrahlung der UV-Strahlung durch den länglichen Reflektor.

Vorteilhafterweise kann auf der Längsachse in dem zylindrischen Reflektor ein nach außen reflektierender Reflektor zur weiteren Homogenisierung der Verteilung der UV-Strahlung auf dem Objekt angeordnet sein. Hierdurch wird eine sogenannte Schattenbildung im Bereich des Mittelpunktes des kreisförmigen Objektes erreicht, die die Strahlungsintensität in diesem Bereich weiter verringert und gleichzeitig diese Strahlung in die Randbereiche des Objektes reflektiert, so daß hierdurch die Intensitätsverteilung auf dem Objekt noch homogener gestaltet werden kann. Dabei kann der nach außen reflektierende Reflektor im wesentlichen kegelförmig sein, wobei die Basis zum Objekt gerichtet ist, oder der nach außen reflektierende Reflektor kann im wesentlichen zylindrisch sein.

Der nach außen reflektierende Reflektor besteht ebenfalls vorteilhafterweise aus hochreflektierendem Material, zum Beispiel Aluminium.

In einer besonderen Ausgestaltung der erfindungsgemäßen Bestrahlungsvorrichtung sind die Abmessungen und Abstrahlungsparameter zum Bestrahlen eines Speichermediums aus Kunststoff ausgelegt, das einen Durchmesser von etwa 120 mm aufweist. Hierbei kann es sich insbesondere um standardisierte Compact-Discs oder DVDs handeln. Bei Compact-Discs wird die erfindungsgemäße Bestrahlungsvorrichtung beispielsweise zum Trocknen einer Lackschicht auf der Oberfläche verwendet, während eine DVD aus zwei miteinander verklebten Discs besteht, wobei der Klebstoff zwischen den beiden Discs durch die von der erfindungsgemäßen Bestrahlungsvorrichtung ausgesendete UV-Strahlung ausgehärtet wird. In diesem Fall hat der zylindrische Reflektor vorteilhafterweise einen Innendurchmesser von 130 bis 160 mm, das heißt der Innendurchmesser des zylindrischen Reflektors ist größer als der des Speichermediums, so daß auch dessen Randbereiche von der homogenen Intensitätsverteilung der UV-Strahlung erfaßt werden. Vorteilhafterweise hat der zylindrische Reflektor weiterhin eine Länge von 80 bis 200 mm. Insbesondere ist hier eine Länge von etwa 100 bis 120 mm besonders vorteilhaft. Je größer die Länge des zylindrischen Reflektors ist, desto besser ist die Homogenität der Intensitätsverteilung der UV-Strahlung. Mit zunehmender Länge sinkt die Temperatur in dem bestrahlten Objekt. Die benötigte Energie für die Bestrahlung nimmt mit zunehmender Länge des zylindrischen Reflektors nur sehr langsam ab.

Weiterhin ist es von Vorteil, wenn die Hochdruck-Entladungslampe eine Gallium-Dotierung aufweist. Dies ist insbesondere bei der Bestrahlung von DVDs zur Aushärtung des Klebstoffes von Vorteil, da das bei DVDs verwendete Polycarbonat erst ab 350 nm durchlässiger wird. Eine Gallium-Dotierung der Hochdruck-Entladungslampe verschiebt das Abstrahlungsspektrum der UV-Strahlung in den längerwelligen Bereich von ≥ 350 nm. Für andere Bestrahlungszwecke können andere Dotierungen vorteilhaft sein, wie zum Beispiel Eisen-Dotierungen oder Quecksilber-Dotierungen. Hochdruck-Entladungslampen mit einer Quecksilber-Dotierung sind in der Regel billiger, einfacher aufgebaut und robuster, haben aber weniger UV-Strahlungen im längerwelligen Bereich. Sie sind beispielsweise bei der Härtung von Oberflächenlacken auf CDs vorteilhaft einzusetzen. Hochdruck-Entladungslampen, die eine Eisen-Dotierung aufweisen, wie zum Beispiel Metall-Halogenid-Strahler, sind auch für das Aushärten des Klebstoffes bei der Fertigung von DVDs geeignet, aber nicht so gut wie Hochdruck-Entladungslampen mit einer Gallium-Dotierung.

Weiterhin ist es von Vorteil, wenn die Belichtungszeit, während der das Objekt mit UV-Strahlung bestrahlt wird, zwischen 0,5 und 2 sec liegt und die Anschlußleistung, mit der die Hochdruck-Entladungslampe betrieben wird, zwischen 1,5 bis 3 kW beträgt. Diese Werte sind beispielsweise bei der Aushärtung des Klebstoffes bei der DVD-Fertigung und der Aushärtung des Oberflächenlackes bei der CD-Fertigung von Vorteil.

In der folgenden Beschreibung werden Ausführungsbeispiele der vorliegenden Erfindung anhand der beigefügten Zeichnungen näher erläutert, in denen zeigen:
- Figur 1: eine schematische Seitenansicht einer Bestrahlungsvorrichtung gemäß der vorliegenden Erfindung,
- Figur 2: eine schematische Darstellung eines Längsschnittes durch einen Teil eines ersten Ausführungsbeispieles einer erfindungsgemäßen Bestrahlungsvorrichtung,
- Figur 3: eine schematische Darstellung eines Querschnittes durch das erste Ausführungsbeispiel der erfindungsgemäßen Bestrahlungsvorrichtung,
- Figur 4: eine schematische Darstellung eines Längsschnittes durch einen Teil eines zweiten Ausführungsbeispieles einer erfindungsgemäßen Bestrahlungsvorrichtung,
- Figur 5: eine schematische Darstellung eines Querschnittes durch das zweite Ausführungsbeispiel der erfindungsgemäßen Bestrahlungsvorrichtung, und
- Figuren 6 und 7: Meßdiagramme, die die Intensitätsverteilung der UV-Strahlung und die Temperatur auf einer mit einer Bestrahlungsvorrichtung gemäß dem zweiten Ausführungsbeispiel bestrahlten DVD darstellen.

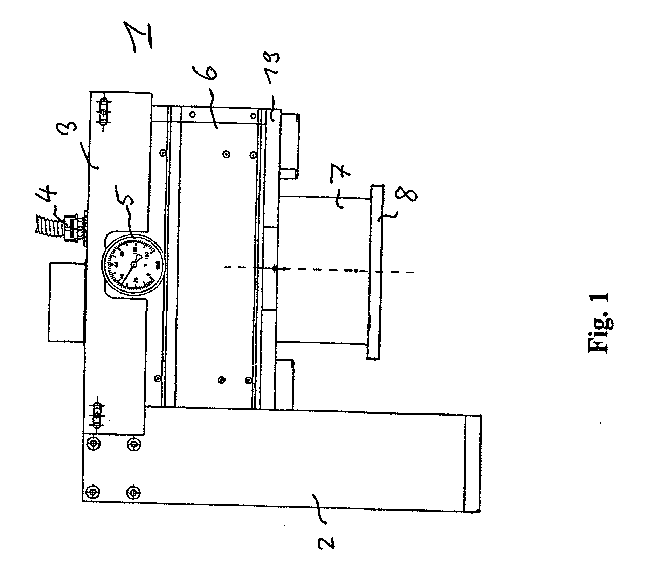

Figur 1 zeigt eine schematische Seitenansicht einer Bestrahlungsvorrichtung 1 zum Bestrahlen von kreisförmigen Objekten, wie zum Beispiel CDs und DVDs gemäß der vorliegenden Erfindung.

Die Bestrahlungsvorrichtung 1 umfaßt eine im Betriebszustand vertikal aufragende Halteeinrichtung 2 nach Art eines Ständers, an der in horizontaler Erstreckung die eigentlichen Bestrahlungs- und Reflektorelemente sowie die notwendigen Anschlüsse befestigt sind. Wie in Figur 1 zu sehen ist, ist eine Befestigungseinrichtung 3, beispielsweise in Form einer Befestigungsschiene oder dergleichen, im rechten Winkel an der Halteeinrichtung 2 befestigt. Unterhalb an der Befestigungseinrichtung 3 ist ein Gehäuse 6 leicht auswechselbar angeordnet, in dem sich eine Hochdruck-Entladungslampe sowie entsprechende Reflektoren befinden. In der in Figur 1 gezeigten Ansicht erstreckt sich die Hochdruck-Entladungslampe in horizontaler Richtung im Gehäuse 6. Unterhalb des Gehäuses ist mittels einer Abstandsplatte 19 eine zylindrische Reflektoreinheit 7 angebracht, unterhalb der ein Teller 8 zur Aufnahme eines zu bestrahlenden kreisförmigen Objektes angeordnet wird. Die auf das Objekt einzustrahlende ultraviolette Strahlung (UV-Strahlung) wird von der Hochdruck-Entladungslampe und dem zugeordneten Reflektor kommend mittels der zylindrischen Reflektoreinheit 7 zu dem Objekt geleitet, das auf dem Teller 8 liegt. Es wird darauf hingewiesen, daß der Teller nicht Teil der Bestrahlungsvorrichtung ist. Optional kann der zylindrische Reflektor an seiner Unterseite einen schrägen Reflektionsring umfassen, der zur Trocknung des Rundbereiches des Objektes beiträgt.

Die erfindungsgemäße Bestrahlungsvorrichtung 1 umfaßt weiterhin einen Stromanschluß 4, eine Temperaturanzeige sowie weitere notwendige Einrichtungen wie Luftkühlungsschlitze und Abluftstutzen. Die erfindungsgemäße Bestrahlungsvorrichtung wird beispielsweise beim Härten oder Trocknen von CDs bzw. DVDs mit Taktzyklen im Sekundenbereich betrieben. Beispielsweise liegt die Belichtungszeit, während der das Objekt mit UV-Strahlung bestrahlt wird, zwischen 0,5 und 2 sec., vorzugsweise 1 sec., während die Anschlußleistung, mit der die Hochdruck-Entladungslampe betrieben wird, zwischen 1,5 und 3 kW, vorzugsweise 2 kW, beträgt. Die Leistung der erfindungsgemäßen Bestrahlungsvorrichtung 1 ist stufenlos regelbar. Als Hochdruck-Entladungslampen werden vorteilhafterweise Standardlampen mit einer Bogenlänge, das heißt einem Abstand zwischen den beiden Elektronen zwischen 150 mm und 200 mm verwendet, die spezifische Leistungen zwischen 60 W/cm und 240 W/cm aufweisen. Die Bogenlänge, die gewählte Leistung sowie die Belichtungszeit sind jeweils auf die Größe des zu bestrahlenden Objektes sowie auf den Zweck der Bestrahlung entsprechend abzustimmen. Bei der Bestrahlung von DVDs zum Aushärten des Klebstoffes zwischen den beiden aufeinanderliegenden Discs wird vorzugsweise eine Hochdruck-Entladungslampe mit einer Bogenlänge von 175 mm verwendet, die Anschlußleistung beträgt vorzugsweise 2 kW und die Belichtungszeit beträgt vorzugsweise 1 sec. Weiterhin weist die Hochdruck-Entladungslampe in diesem Fall vorzugsweise eine Gallium-Dotierung auf, wobei jedoch auch ein Metall-Halogenid-Strahler verwendet werden kann. Für andere Anwendungen, zum Beispiel zur Härtung von Lack auf der Oberfläche von CDs werden vorteilhafterweise mit Quecksilber dotierte Hochdruck-Entladungslampen verwendet.

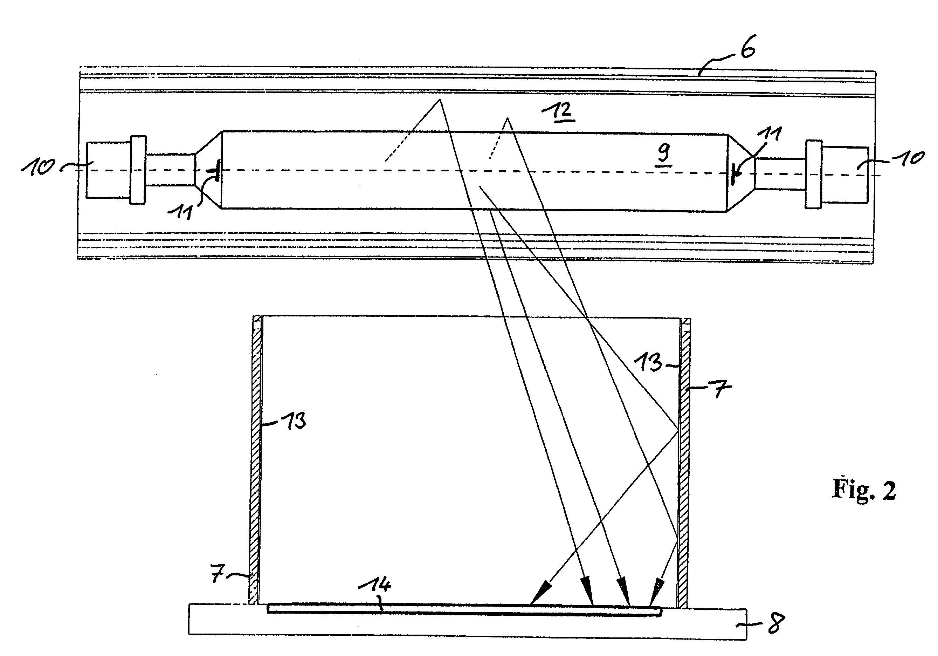

Figur 2 zeigt eine schematische Ansicht eines Längsschnittes durch das Gehäuse 6 und die zylindrische Reflektoreinheit 7 der in Figur 1 gezeigten Bestrahlungsvorrichtung 1 gemäß der vorliegenden Erfindung sowie des Tellers 8. Die Hochdruck-Entladungslampe 9 ist innerhalb des Gehäuses 6 an zwei Halterungen 10 befestigt, in denen die Stromanschlüsse für die beiden Elektroden 11 der Hochdruck-Entladungslampe 9 geführt sind. Die Bogenlänge der Hochdruck-Entladungslampe 9 wird durch den Abstand der beiden Elektroden 11 bestimmt, die jeweils in dem konisch zulaufenden Endabschnitt der Entladungslampe 9 angeordnet sind. Hinter der Hochdruck-Entladungslampe 9 bzw. im Betriebszustand oberhalb der Hochdruck-Entladungslampe 9 ist ein länglicher Reflektor 12 angeordnet, der sich längs der Hochdruck-Entladungslampe 9 erstreckt und diese teilweise umschließt, so daß die von der Hochdruck-Entladungslampe 9 ausgestrahlte UV-Strahlung nach unten auf ein zu bestrahlendes Objekt 14 reflektiert wird. Der Reflektor 12 weist eine hoch reflektierende Schicht aus Reinst-Aluminium (99,99% Aluminium) auf, die die UV-Strahlung praktisch ohne Verlust auf das Objekt 14 reflektiert.

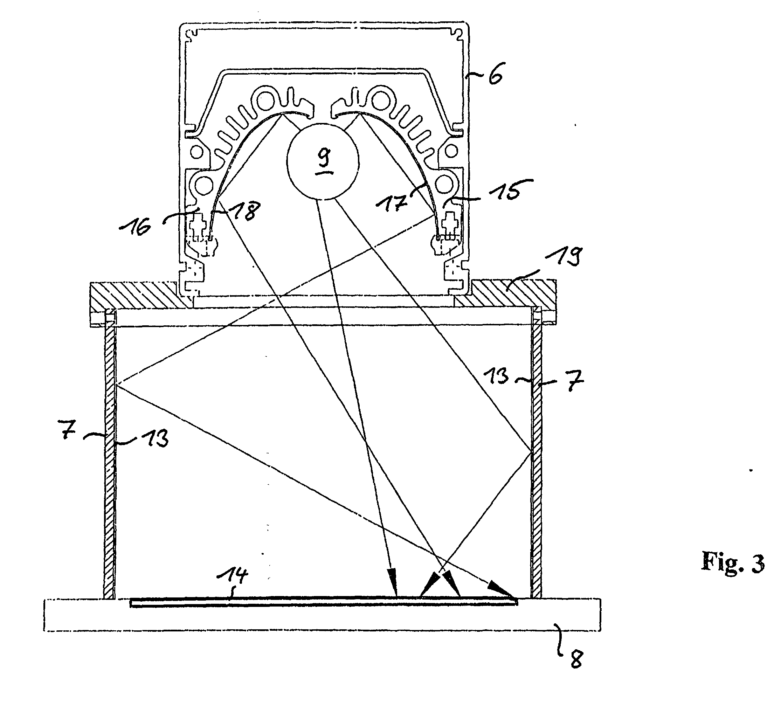

Die in Figur 2 angedeuteten Strahlungswege deuten die verschiedenen Möglichkeiten an, wie die UV-Strahlung zum Objekt 14 gelangt. Durch die zylindrische Reflektoreinheit 7, die an der Innenseite eine Schicht aus hoch reflektierendem Reinst-Aluminium 13 aufweist, wird der nach außen gerichtete Teil der UV-Strahlung, der das Objekt 14 eigentlich nicht mehr treffen würde, in die Randbereiche des kreisförmigen Objektes 14 reflektiert. Hierdurch wird eine weitgehend homogene Intensitätsverteilung der UV-Strahlung auf dem Objekt 14 erreicht. Wie in Figur 2 gut zu erkennen ist, ist der Innendurchmesser der zylindrischen Reflektoreinheit 7 etwas größer als der Durchmesser des kreisförmigen Objektes 14, so daß auch die äußersten Randbereiche des Objektes 14 eine ausreichend hohe Intensität an UV-Strahlung erhalten. Falls das kreisförmige Objekt 14 eine CD oder eine DVD ist, die einen Standarddurchmesser von etwa 120 mm aufweisen, beträgt der Innendurchmesser der zylindrischen Reflektoreinheit 7 vorzugsweise etwa 140 bis 150 mm. Die Bogenlänge der Hochdruck-Entladungslampe 9 beträgt in diesem Fall vorzugsweise etwa 175 mm und die Höhe der zylindrischen Reflektoreinheit 7 etwa 100 mm. In Figur 2 ist die Abstandsplatte 19 (vergleiche Figur 1) nicht dargestellt. Sie weist jedoch nur eine Höhe von einigen mm auf, wie in Figur 3 zu erkennen ist.

Figur 3 zeigt eine schematische Ansicht eines Längsschnittes durch das Gehäuse 6 und die zylindrische Reflektoreinheit 7 der in Figur 1 gezeigten erfindungsgemäßen Bestrahlungsvorrichtung, sowie den Teller 8. Im Gehäuse 6 erstreckt sich die Hochdruck-Entladungslampe 9, die oberhalb und seitlich von dem länglichen Reflektor 12 umgeben ist, der sich aus zwei länglichen Reflektorelementen 15 und 16 zusammensetzt, die auf ihrer Innenseite jeweils eine hochreflektierende Aluminiumschicht 17 bzw. 18 mit einem zumindest teilweise parabelförmigen Querschnitt umfassen. Die zumindest teilweise parabolische Form der Reflektorschichten 17 und 18 bewirkt, daß die von der Hochdruck-Entladungslampe 9 ausgestrahlte und von den Reflektorschichten 17 und 18 reflektierte UV-Strahlung bereits mit einer relativ homogenen Intensitätverteilung das Gehäuse 6 nach unten verläßt.

Wie in Figur 3 zu erkennen ist, sind die beiden länglichen Reflektorelemente 15 und 16 dergestalt schwenkbar im Gehäuse 6 befestigt, daß sie in eine Position verschwenkt werden können, in der keine UV-Strahlung nach unten aus dem Gehäuse 6 austreten kann (Shuttersystem). Bei einem Dauerbetrieb mit Taktzyklen im Sekundenbereich öffnen sich die länglichen Reflektorelemente 15 und 16 jeweils nur während der vorbestimmten Belichtungszeit, beispielsweise für eine Sekunde.

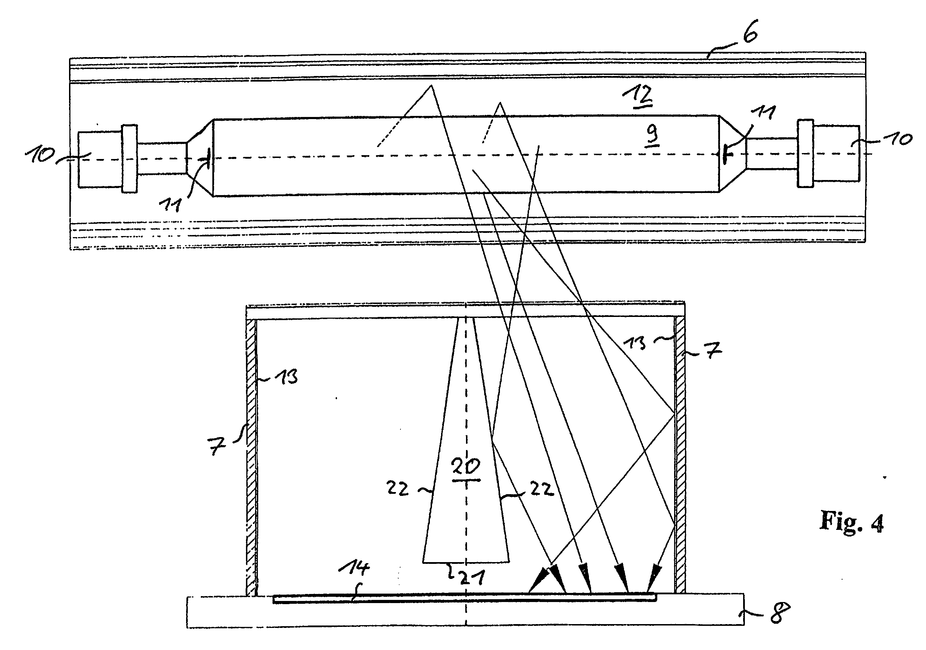

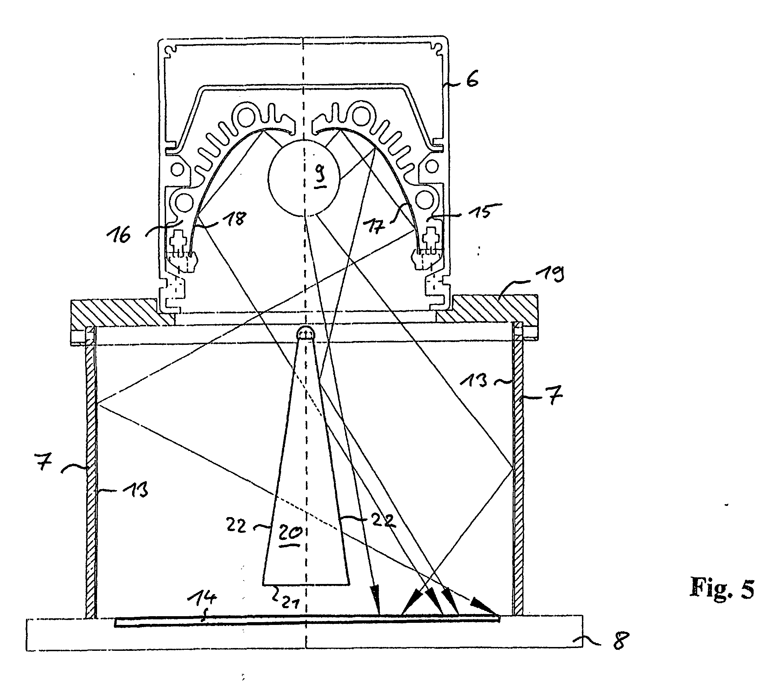

In den Figuren 4 und 5 ist eine weitere bevorzugte Ausgestaltung der erfindungsgemäßen Bestrahlungsvorrichtung 1 dargestellt, bei der sich innerhalb der zylindrischen Reflektoreinheit 7 auf deren Längsachse ein im wesentlichen kegelförmiger weiterer Reflektor 20 befindet. Figur 4 entspricht dabei der in Figur 2 gezeigten Darstellung eines Längsschnittes und Figur 5 entspricht der in Figur 3 gezeigten Darstellung eines Querschnittes.

Der im wesentlichen kegelförmige Reflektor 20 wird zum Objekt hin breiter, das heißt die Basis 21 des Kegels weist zum Objekt 14 hin. Die nach außen weisenden Flächen des kegelförmigen Reflektors 20 sind mit einer hochreflektierenden Aluminiumschicht 22 versehen, die auftreffende UV-Strahlung praktisch ohne Verluste reflektiert. Der Durchmesser des kegelförmigen Reflektors 20 an der Basis beträgt vorzugsweise etwa 1/5 des Innendurchmessers der zylindrischen Reflektoreinheit 7, so daß lediglich der Mittelbereich des zu bestrahlenden Objektes 14 im Schatten des Reflektors 20 liegt. Der kegelförmige Reflektor 20 reduziert die UV-Strahlung im Mittelpunkt des Objektes 14 mittels der Schattenbildung weiter und reflektiert die entsprechende Strahlung in die Randbereiche des Objektes 14. Hierdurch wird beispielsweise bei CDs und DVDs eine weitere Steigerung der Bestrahlungseffizienz und Homogenisierung der Intensität auf den zu bestrahlenden Flächen des Objektes 14 ermöglicht, da CDs und DVDs in der Mitte eine Öffnung aufweisen, mit der sie in entsprechende Aufzeichnungs- oder Abspielgeräte eingespannt werden. Der Mittelbereich muß bei dieser Art von Objekten somit nicht mit UV-Strahlung bestrahlt werden, da hier weder zu verklebende noch mit Lack zu versehende Flächen vorhanden sind. Die Bohrung bzw. Öffnung in der Mitte einer CD bzw. DVD hat einen Durchmesser von etwa 18 mm und der die Öffnung umgebende transparente Rand hat eine Breite von ebenfalls etwa 18 mm, so daß ein Mittelbereich mit etwa 36 mm Durchmesser nicht mit UV-Strahlung bestrahlt werden muß. Es ist beispielsweise vorteilhaft, wenn der durch den kegelförmigen Reflektor 20 erzeugte Schattenbereich einen Durchmesser von etwa 30 mm aufweist, wodurch eine gleichmäßige Bestrahlung der übrigen Flächen des Objektes mit homogener Intensität erreicht wird. Da die normalerweise in den Mittelbereich des Objektes gestrahlte UV-Strahlung somit in die Randbereiche reflektiert wird, kann die insgesamt benötigte Strahlungsleistung weiter verringert werden.

Alternativ kann der Reflektor 20 im Inneren der zylindrischen Reflektoreinheit 7 auch im wesentlichen zylindrisch ausgebildet sein, da auch diese Form eine Schattenbildung im Mittelbereich des zu bestrahlenden Objektes 14 und eine Abstrahlung der auf den Mittelbereich gerichteten UV-Strahlung in die Randbereiche des Objektes 14 ermöglicht.

Die Befestigung des Reflektors 20 kann beispielsweise mittels dünnen Drähten, Stangen oder Schnüren in der zylindrischen Reflektoreinheit 7 oder am Gehäuse 6, das heißt im Übergangsbereich zwischen dem Gehäuse 6 und der Abstandsplatte 19 erfolgen. Alternativ kann der Reflektor 20 auch in entsprechender Weise an der Abstandsplatte 19 befestigt sein. Hinsichtlich der Befestigung des Reflektors 20 ist zu beachten, daß die Befestigungselemente möglichst dünn aber trotzdem stabil sein müssen, um den Strahlengang der UV-Strahlung nicht zu beeinträchtigen.

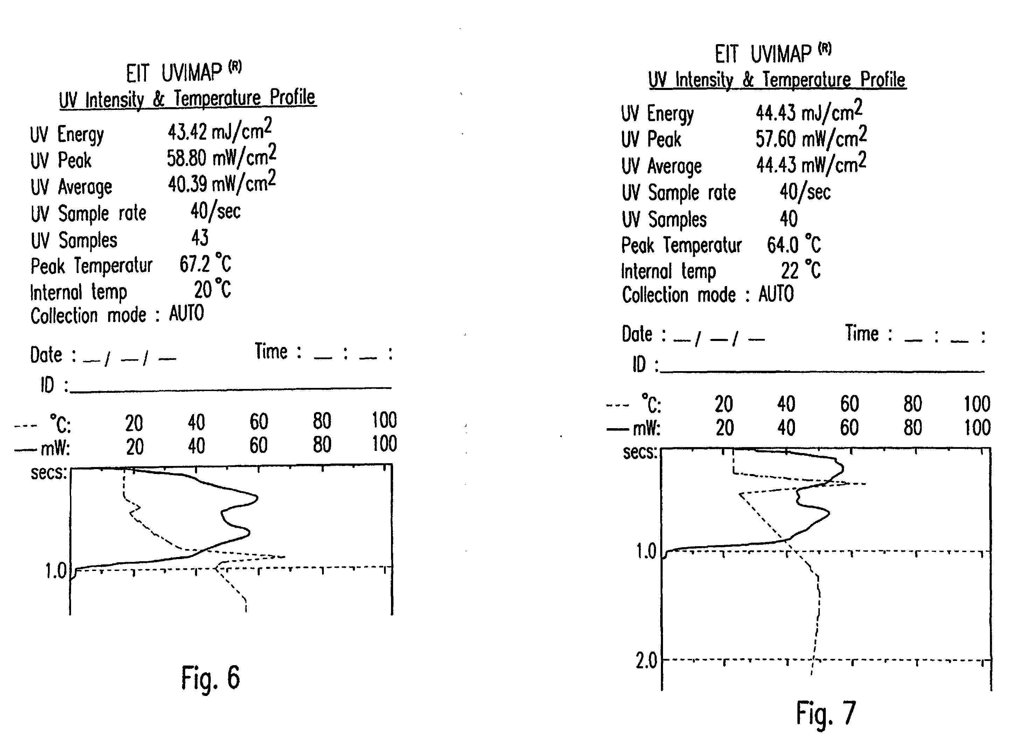

In den Figuren 6 und 7 sind Beispielmessungen für die Intensitätsverteilung der UV-Strahlung und der Temperatur auf dem bestrahlten Objekt 14 für das in den Figuren 4 und 5 dargestellte Ausführungsbeispiel gezeigt. Das in Figur 6 gezeigte Diagramm bezieht sich dabei auf die Längsrichtung, das heißt die Richtung parallel zur Erstreckung des Gehäuses 6 bzw. der Hochdruck-Entladungslampe 9 (entsprechend der in Figur 4 gezeigten Schnittansicht) und das in Figur 7 gezeigte Diagramm bezieht sich auf die Querrichtung, das heißt die Richtung quer zur Längserstreckung des Gehäuses 6 bzw. der Hochdruck-Entladungslampe 9 (entsprechend der in Figur 5 gezeigten Schnittansicht). In beiden Diagrammen ist gut zu erkennen, daß die UV-Strahlungsintensität im Mittelbereich durch die Schattenbildung des Reflektors 20 ebenso wie die Temperatur in diesem Bereich deutlich verringert sind. Es ist anzumerken, daß die in den Figuren 6 und 7 gezeigten Beispielmessungen lediglich die Zielrichtung der vorliegenden Erfindung angeben sollen. Beide Beispielmessungen wurden mit einer unten offenen zylindrischen Reflektoreinheit 7, d.h. ohne Teller 8 durchgeführt. Der Teller 8 ist auf seiner Oberseite mit einem hoch reflektierenden Material, wie z.B. Aluminium versehen und kann abgeschrägte Ränder zwischen dem Außenrand des Objektes 14 und dem Innenrand der zylindrischen Reflektoreinheit 7 aufweisen, wodurch die Intensitätsverteilung der UV-Strahlung auf den bestrahlten Flächen des Objektes 14 in der Realität wesentlich homogener wird, als in den Figuren 6 und 7 dargestellt ist.

## Patentansprüche

1. Bestrahlungsvorrichtung (1) zum Bestrahlen von kreisförmigen Objekten (14) mit UV-Strahlung, mit
einer länglichen Hochdruck-Entladungslampe (9) zum Ausstrahlen von UV-Strahlung,
einem länglichen Reflektor (12) aus hochreflektierendem Material, der sich längs der Hochdruck-Entladungslampe (9) erstreckt und diese teilweise umschließt, um die ausgestrahlte UV-Strahlung auf ein zu bestrahlendes Objekt (14) zu reflektieren, und
einem nach innen reflektierenden zylindrischen Reflektor (13) aus hochreflektierendem Material, der zwischen der Hochdruck-Entladungslampe (9) und dem zu bestrahlenden Objekt (14) dergestalt angeordnet ist, daß die von der Hochdruck-Entladungslampe (9), dem länglichen Reflektor (12) und dem zylindrischen Reflektor (13) kommende UV-Strahlung mit einer weitgehend homogenen Intensitätsverteilung auf das Objekt (14) fällt.

2. Bestrahlungsvorrichtung gemäß Anspruch 1,
**dadurch gekennzeichnet,**
**daß** der längliche Reflektor (12) zwei längliche Reflektorelemente (17, 18) aufweist, die jeweils einen zumindest teilweise parabelförmigen Querschnitt haben.

3. Bestrahlungsvorrichtung gemäß Anspruch 1 oder 2,
**dadurch gekennzeichnet,**
**daß** auf der Längsachse in dem zylindrischen Reflektor (13) ein nach außen reflektierender Reflektor (20) zur weiteren Homogenisierung der Verteilung der UV-Strahlung auf dem Objekt (14) angeordnet ist.

4. Bestrahlungsvorrichtung gemäß Anspruch 3,
**dadurch gekennzeichnet,**
**daß** der nach außen reflektierende Reflektor (20) im wesentlichen kegelförmig ist, wobei die Basis (21) zum Objekt (14) gerichtet ist.

5. Bestrahlungsvorrichtung gemäß Anspruch 3,
**dadurch gekennzeichnet,**
**daß** der nach außen reflektierende Reflektor im wesentlichen zylindrisch ist.

6. Bestrahlungsvorrichtung gemäß einem der Ansprüche 1 bis 5,
**dadurch gekennzeichnet,**
**daß** die Abmessungen und Abstrahlungsparameter zum Bestrahlen eines Speichermediums aus Kunststoff ausgelegt sind, das einen Durchmesser von ungefähr 120 mm aufweist.

7. Bestrahlungsvorrichtung gemäß Anspruch 6,
**dadurch gekennzeichnet,**
**daß** der zylindrische Reflektor (13) einen Innendurchmesser von 130 bis 160 mm aufweist.

8. Bestrahlungsvorrichtung gemäß Anspruch 6 oder 7,
**dadurch gekennzeichnet,**
**daß** der zylindrische Reflektor (13) eine Länge von 80 bis 200 mm aufweist.

9. Bestrahlungsvorrichtung gemäß einem der Ansprüche 1 bis 8,
**dadurch gekennzeichnet,**
**daß** die Hochdruck-Entladungslampe (9) eine Gallium-Dotierung aufweist.

10. Bestrahlungsvorrichtung gemäß einem der Ansprüche 1 bis 9,
**dadurch gekennzeichnet,**
**daß** die Belichtungszeit, während der das Objekt (14) mit UV-Strahlung bestrahlt wird, zwischen 0,5 und 2 s liegt, und die Anschlußleistung, mit der die Hochdruck-Entladungslampe (9) betrieben wird, 1,5 bis 3 kW beträgt.

## Claims

1. Radiation device (1) for irradiating circular objects (14) with UV radiation, comprising
an elongated high-pressure discharge lamp (9) for the emission of UV radiation, an elongated reflector (12), made from a highly reflective material, which extends along the length of the high-pressure discharge lamp (9) partially enclosing the latter, in order to reflect the emitted UV radiation onto an object (14) which is to be irradiated, and a cylindrical reflector (13) made from a highly reflecting material and reflecting inwards, which is arranged between the high-pressure discharge lamp (9) and the object (14) to be irradiated in such a manner that the UV radiation coming from the high-pressure discharge lamp (9), the elongated reflector (12) and the cylindrical reflector (13) strikes the object (14) with a largely homogeneous distribution of intensity.

2. Radiation device according to claim 1,
**characterised in that**
the elongated reflector (12) provides two elongated reflector elements (17,18), each of which has an at least partially parabolic cross-section.

3. Radiation device according to claim 1 or 2,
**characterised in that**
a reflector (20) reflecting outwards is arranged on the longitudinal axis within the cylindrical reflector (13) in order further to homogenise the distribution of UV radiation on the object (14).

4. Radiation device according to claim 3,
**characterised in that**
the reflector (20) reflecting outwards is essentially conical, the base (21) being directed towards the object (14).

5. Radiation device according to claim 3,
**characterised in that**
the reflector (20) reflecting outwards is essentially cylindrical.

6. Radiation device according to any one of claims 1 to 5,
**characterised in that**
the dimensions and irradiation parameters are designed for the irradiation of a storage medium made from synthetic material, which provides a diameter of approximately 120 mm.

7. Radiation device according to claim 6
**characterised in that**
the cylindrical reflector (13) provides an interior diameter of 130 to 160 mm.

8. Radiation device according to claim 6 or 7,
**characterised in that**
the length of the cylindrical reflector (13) is from 80 to 200 mm.

9. Radiation device according to any one of claims 1 to 8,
**characterised in that**
the high-pressure discharge lamp (9) is gallium-doped.

10. Radiation device according to any one of claims 1 to 9,
**characterised in that**
the illumination time, during which the object (14) is irradiated with UV radiation, is between 0.5 and 2 seconds, and the connected load at which the high-pressure discharge lamp (9) is operated is 1.5 to 3 to kW.

## Revendications

1. Dispositif d'irradiation (1) destiné à irradier des objets (4) de forme circulaire avec un rayonnement UV, comportant
une lampe à décharge à haute pression (9) de forme allongée destinée à émettre un rayonnement UV,
un réflecteur (12) de forme allongée et en matériau très réfléchissant qui s'étend le long de la lampe à décharge à haute pression (9) et qui entoure partiellement celle-ci pour réfléchir le rayonnement UV émis sur un objet (14) à irradier, et
un réflecteur cylindrique (13) réfléchissant vers l'intérieur en matériau très réfléchissant qui est agencé entre la lampe à décharge à haute pression (9) et l'objet (14) à irradier de sorte que le rayonnement UV provenant de la lampe à décharge à haute pression (9), du réflecteur (12) de forme allongée et du réflecteur cylindrique (13) est incident à l'objet (14) avec une distribution d'intensité dans une large mesure homogène.

2. Dispositif d'irradiation selon la revendication 1, **caractérisé en ce que** le réflecteur (12) de forme allongée comporte deux éléments de réflecteur (17, 18) de forme allongée qui ont chacun une section au moins partiellement parabolique.

3. Dispositif d'irradiation selon la revendication 1 ou 2, **caractérisé en ce que** un réflecteur (20) réfléchissant vers l'extérieur est agencé sur l'axe longitudinal dans le réflecteur cylindrique (13) en vue d'homogénéiser davantage la distribution du rayonnement UV sur l'objet (14).

4. Dispositif d'irradiation selon la revendication 3, **caractérisé en ce que** le réflecteur (20) réfléchissant vers l'extérieur a sensiblement la forme d'un cône dont la base (21) est orientée vers l'objet (14).

5. Dispositif d'irradiation selon la revendication 3, **caractérisé en ce que** le réflecteur réfléchissant vers l'extérieur a sensiblement la forme d'un cylindre.

6. Dispositif d'irradiation selon l'une des revendications 1 à 5, **caractérisé en ce que** les dimensions et les paramètres d'irradiation sont étudiés en vue d'irradier un support d'information en matière plastique qui a un diamètre d'environ 120 mm.

7. Dispositif d'irradiation selon la revendication 6, **caractérisé en ce que** le réflecteur cylindrique (13) a un diamètre intérieur compris entre 130 mm et 160 mm.

8. Dispositif d'irradiation selon la revendication 6 ou 7, **caractérisé en ce que** le réflecteur cylindrique (13) a une longueur comprise entre 80 et 200 mm.

9. Dispositif d'irradiation selon l'une des revendications 1 à 8, **caractérisé en ce que** la lampe à décharge à haute pression (9) comporte un dopant au gallium.

10. Dispositif d'irradiation selon l'une des revendications 1 à 9, **caractérisé en ce que** le temps d'exposition, pendant lequel l'objet (14) est irradié avec un rayonnement UV, est compris entre 0,5 et 2 s, et la puissance d'alimentation, à laquelle la lampe à décharge à haute pression (9) est exploitée, est comprise entre 1,5 et 3 kW.
